# EUROPEAN PATENT APPLICATION

(11) **EP 4 478 109 A1**
(43) Date of publication of application: **18.12.2024**
(21) Application number: 23773883.6
(22) Date of filing: 22.03.2023
(51) Int. Cl.: G02B 27/01

(54) **HEAD-UP DISPLAY GLASS AND HEAD-UP DISPLAY SYSTEM**

(30) Priority: 22.03.2022 CN 202210282494
(71) Applicant: Fujian Wanda Automobile Glass Industry Co., Ltd., Fuqing Fuzhou, Fujian 350300 (CN)
(72) Inventor: LU, Yuemin, Fuzhou, Fujian 350300 (CN); CHEN, Zhixin, Fuzhou, Fujian 350300 (CN); LIN, Jun, Fuzhou, Fujian 350300 (CN); ZHANG, Canzhong, Fuzhou, Fujian 350300 (CN)
(74) Representative: Mewburn Ellis LLP
(86) International application number: PCT/CN2023/082935
(87) International publication number: WO 2023/179636

(57) **Abstract**

Head-up display glass (100) and a head-up display system (1000) are provided. The head-up display glass (100) includes laminated glass and a reflective coating (40). The laminated glass includes outer glass (10), a polymer interlayer (30), and inner glass (20). The reflective coating (40) includes an inner barrier layer (41), an improvement layer (42), and at least one laminated structure (43) that are stacked. During heat treatment, the inner barrier layer (41) can prevent alkali metal ions through the glass surface from damaging the improvement layer (42), and prevent oxygen diffusion from oxidizing the improvement layer (42). The improvement layer (42) can further improve the reflectivity of the reflective coating (40) for P-polarized light, and cause the reflective coating (40) to maintain the relatively low relatively for visible light. Therefore, when the driver inside the vehicle visually observes the reflection imaging of the head-up display glass (100), only the reflected image of the reflective coating (40) can be observed, thereby eliminating the visual ghosting phenomenon. In addition, the reflectivity of the head-up display glass (100) for visible light is less than or equal to 15%, and no obvious reflection can be observed inside the vehicle.

## Description

This application claims priority to Chinese Patent Application No. 202210282494.1, filed March 22, 2022, and entitled "HEAD-UP DISPLAY GLASS AND HEAD-UP DISPLAY SYSTEM", the entire disclosure of which is hereby incorporated by reference.

### TECHNICAL FIELD

This disclosure relates to the field of glass product technology, and in particular to head-up display glass and a head-up display system.

### BACKGROUND

With the development of science and technology, head-up display (HUD) systems are increasingly used on vehicles. The head-up display system on the vehicle can display important driving information, such as speed, engine revolution, fuel consumption, tire pressure, navigation, and information about an external smart device, in field of view of a driver in real time, so that the driver can see the driving information without looking down, thereby avoiding distracting the driver from the road ahead. In addition, the driver does not need to adjust eyes between observing a long-range road and a short-range instrument, which can avoid eye fatigue and can greatly enhance driving safety and improve driving experience.

At present, the head-up display technology is realized mainly by two ways: light-emitting imaging and projection imaging. Regarding the projection imaging, head-up display glass itself or an additional optical element is utilized for projection display, and the head-up display glass is the simplest structure to utilized for reflecting a projection image. Common head-up display glass is laminated glass. Light emitted by a projection light-source of the head-up display system is reflected when passing through two surfaces of the laminated glass in contact with air. Reflected images on the two surfaces may be offset to form two mutually interfered ghosts, which greatly limits sharpness of a projection display image.

### SUMMARY

The present disclosure aims to provide head-up display glass and a head-up display system. The head-up display glass can be sharply imaged without a ghosting phenomenon.

Head-up display glass is provided in the present disclosure. The head-up display glass includes laminated glass and a reflective coating. The reflective coating is configured to reflect P-polarized light. The laminated glass includes outer glass, a polymer interlayer, and inner glass. The polymer interlayer is sandwiched between the outer glass and the inner glass. The reflective coating includes an inner barrier layer, an improvement layer, and at least one laminated structure that are stacked. The inner barrier layer is disposed on a surface of the inner glass away from the polymer interlayer. The at least one laminated structure each includes a high refractive-index layer and a low refractive-index layer that are stacked in sequence in a direction away from the inner barrier layer. The high refractive-index layer has a refractive index greater than or equal to 1.8. The low refractive-index layer has a refractive index less than 1.7. The improvement layer is disposed between the inner barrier layer and the at least one laminated structure, or the improvement layer is disposed between the high refractive-index layer and the low refractive-index layer.

The head-up display glass has a reflectivity of Y for P-polarized light incident at an incident angle of θ. When 60° ≤ θ ≤ 75°, Y ≥ 15%.

When 65° ≤ θ ≤ 75°, Y ≥ 20%. When 70° ≤ θ ≤ 75°, Y ≥ 27%.

The head-up display glass has a reflectivity less than or equal to 15% for visible light incident vertically.

A material of the inner barrier layer includes at least one of an oxide of zinc (Zn), tin (Sn), titanium (Ti), silicon (Si), aluminum (Al), niobium (Nb), zirconium (Zr), nickel (Ni), magnesium (Mg), chromium (Cr), or tantalum (Ta) and an oxide of an alloy thereof, or at least one of a nitride of Si, Al, Zr, boron (B), or Ti and a nitride of an alloy thereof.

A material of the improvement layer includes at least one of an elementary substance of Ni, Cr, iron (Fe), Ti, molybdenum (Mo), copper (Cu), Al, gold (Au), Sn, Zr, indium (In), Si, Nb, germanium (Ge), tungsten (W), Ta, palladium (Pd), or platinum (Pt) and an alloy thereof.

The elementary substance or the alloy in the improvement layer has a crystal structure. The improvement layer has a thickness of 1 nm - 40 nm.

The elementary substance or the alloy in the improvement layer has an amorphous structure. The improvement layer has a thickness of 1 nm - 5 nm.

The reflective coating further includes an outer barrier layer disposed on a surface of the at least one laminated structure away from the inner barrier layer.

A material of the outer barrier layer includes at least one of a nitride of Si, Al, Zr, Ti, B, or Ni and a nitrogen oxide of an alloy thereof.

The outer barrier layer has a thickness of 3 nm - 30 nm.

A refractive index of the inner glass differs from a refractive index of the polymer interlayer by not greater than 0.1. A refractive index of the outer glass differs from the refractive index of the polymer interlayer by not greater than 0.1.

A reflected color of the head-up display glass measured from the reflective coating has a value of *a* ranging from -8 to 3 and a value of *b* ranging from -12 to 0.

Head-up display glass includes laminated glass and a reflective coating. The reflective coating is configured to reflect P-polarized light. The laminated glass includes outer glass, a polymer interlayer, and inner glass. The polymer interlayer is sandwiched between the outer glass and the inner glass. The reflective coating includes an improvement layer and at least one laminated structure. The at least one laminated structure each includes a high refractive-index layer and a low refractive-index layer that are stacked in sequence in a direction away from the inner barrier layer. The high refractive-index layer has a refractive index greater than or equal to 1.8. The low refractive-index layer has a refractive index less than 1.7. The head-up display glass has a reflectivity of Y for P-polarized light incident at an incident angle of θ, where when 60° ≤ θ ≤ 75°, Y ≥ 15%.

The reflective coating further includes an inner barrier layer. The inner barrier layer is disposed on a surface of the inner glass away from the polymer interlayer.

A material of the improvement layer has a crystal structure. The improvement layer has a thickness of 1 nm - 40 nm.

A material of the improvement layer has an amorphous structure. The improvement layer has a thickness of 1 nm - 5 nm.

A material of the improvement layer comprises at least one of an elementary substance of Ni, Cr, Fe, Ti, Mo, Cu, Al, Au, Sn, Zr, In, Si, Nb, Ge, W, Ta, Pd, or Pt and an alloy thereof.

A reflected color of the head-up display glass measured from the reflective coating has a value of *a* ranging from -8 to 3 and a value of *b* ranging from -12 to 0.

A head-up display system is further provided in the present disclosure. The head-up display system includes a projection light-source and the head-up display glass described above. The projection light-source is configured to produce P-polarized light. The P-polarized light is projected onto the reflective coating.

The head-up display glass and the head-up display system are provided in the present disclosure. The inner barrier layer and the improvement layer are additionally disposed in the reflective coating. During heat treatment, the inner barrier layer can prevent alkali metal ions through the glass surface from damaging the improvement layer, and prevent oxygen diffusion from oxidizing the improvement layer. The improvement layer can further improve the reflectivity of the reflective coating for P-polarized light, and cause the reflective coating to maintain the relatively low relatively for visible light. Under the cooperative action of the inner barrier layer, the improvement layer, and the laminated structure, the reflective coating formed has the relatively high reflectivity for the P-polarized light. Therefore, when the driver inside the vehicle visually observes the reflection imaging of the head-up display glass, only the reflected image of the reflective coating can be observed, thereby eliminating the visual ghosting phenomenon. In addition, the reflectivity of the head-up display glass in the present disclosure for visible light is less than or equal to 15%, and no obvious reflection can be observed inside the vehicle.

### BRIEF DESCRIPTION OF THE DRAWINGS

To describe the technical solutions in embodiments of the present disclosure or the related art more clearly, the accompanying drawings required for use in the embodiments or the related art are briefly described below. Apparently, the accompanying drawings in the following description show merely some embodiments of the present disclosure, and those of ordinary skill in the art may obtain other accompanying drawings from these accompanying drawings without creative effort.
FIG. 1 is a schematic structural view of a vehicle on which a head-up display system is mounted according to an embodiment of the present disclosure.
FIG. 2 is a schematic structural view of the head-up display system in the vehicle illustrated in FIG. 1.
FIG. 3 is a schematic structural cross-sectional view of head-up display glass in the head-up display system in a first embodiment illustrated in FIG. 2.
FIG. 4 is a schematic structural view of a reflective coating of the head-up display glass of a first example in the first embodiment illustrated in FIG. 3.
FIG. 5 is a schematic structural view of a reflective coating of the head-up display glass of a second example in the first embodiment illustrated in FIG. 3.
FIG. 6 is a schematic structural view of a reflective coating of the head-up display glass of a third example in the first embodiment illustrated in FIG. 3.
FIG. 7 is a schematic structural view of a reflective coating of the head-up display glass of a fourth example in the first embodiment illustrated in FIG. 3.
FIG. 8 is a schematic structural view of a reflective coating of the head-up display glass of a fifth example in the first embodiment illustrated in FIG. 3.
FIG. 9 is a schematic structural view of a reflective coating of the head-up display glass of a sixth example in the first embodiment illustrated in FIG. 3.
FIG. 10 is a schematic structural view of a reflective coating of the head-up display glass of a first example in a second embodiment illustrated in FIG. 3.
FIG. 11 is a schematic structural view of a reflective coating of the head-up display glass of a second example in the second embodiment illustrated in FIG. 3.

### DETAILED DESCRIPTION

The following will clearly and completely describe technical solutions of embodiments of the present disclosure with reference to the accompanying drawings. Apparently, embodiments described herein are merely some embodiments, rather than all embodiments of the present disclosure. Based on the embodiments of the present disclosure, all other embodiments obtained by those of ordinary skill in the art without creative effort shall fall within the protection scope of the present disclosure.

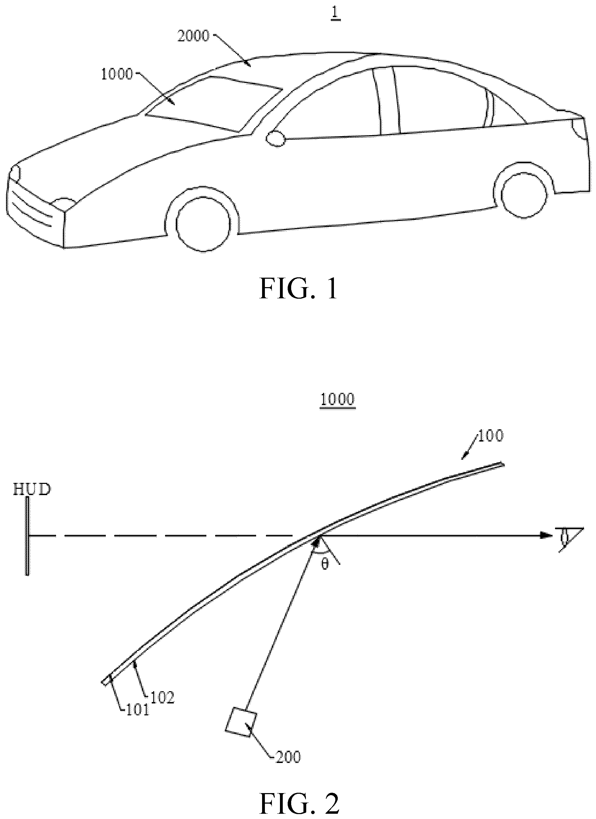

Reference can be made to FIG. 1, which is a schematic structural view of a vehicle 1 on which a head-up display system 100 is mounted according to an embodiment of the present disclosure.

The vehicle 1 includes a head-up display system 1000 and a vehicle body 2000. The head-up display system 1000 is disposed on the vehicle body 2000 and is used for displaying important driving information, such as speed, engine revolution, fuel consumption, tire pressure, navigation, and information about an external smart device, in field of view of a driver in real time.

Reference can be made to FIG. 2, which is a schematic structural view of the head-up display system 1000 in the vehicle 1 illustrated in FIG. 1.

The head-up display system 1000 includes head-up display glass 100 and a projection light-source 200. The head-up display glass 100 is mounted on the vehicle body 2000. The projection light-source 200 is located inside the vehicle body 2000. The head-up display glass 100 has a first side-surface 101 and a second side-surface 102 opposite to the first side-surface 101. When the head-up display glass 100 is mounted on the vehicle, the first side-surface 101 faces the exterior of the vehicle, and the second side-surface 102 faces the interior of the vehicle.

The projection light-source 200 is mounted inside the vehicle. The projection light-source 200 is configured to produce P-polarized light. The P-polarized light is projected onto the second side-surface 102 of the head-up display glass 100 facing the interior of the vehicles. Some of the P-polarized light is incident onto the second side-surface 102 at an incident angle of θ, and is reflected on the second side-surface 102. Some of the P-polarized light enters the head-up display glass 100 to reach the first side-surface 101, and is reflected on the first side-surface 101. The second side-surface 102 of the head-up display glass 100 facing the interior of the vehicle has a relatively high reflectivity for P-polarized light, and the first side-surface 101 of the head-up display glass 100 facing the exterior of the vehicle has a relatively low reflectivity for P-polarized light, so that when the driver inside the vehicle visually observes the reflection imaging (HUD display image) of the head-up display glass 100, only a reflected image on the second side-surface 102 can be observed, thereby eliminating a visual ghosting phenomenon.

The case where the projection light-source 200 produces P-polarized light may be understood as the case where at least 80% of the projection light produced by the projection light-source 200 is P-polarized light. When the proportion of the P-polarized light in the projection light is higher, the head-up display image is brighter and sharper, and the visual ghosting phenomenon is easier to be eliminated. More preferably, at least 90% of the projection light is P-polarized light. Particularly, 100% of the projection light is P-polarized light, that is, the projection light is substantially pure P-polarized light.

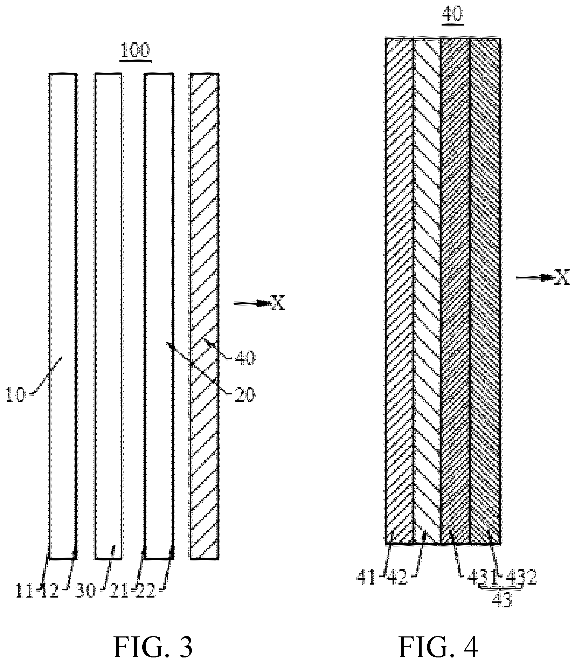

Reference can be made to FIG. 3, which is a schematic structural cross-sectional view of head-up display glass 100 in the head-up display system 1000 in a first embodiment illustrated in FIG. 2. For ease of description, a thickness direction of the head-up display glass 100 as illustrated in FIG. 2 is defined as X-axis direction.

The head-up display glass 100 includes laminated glass and a reflective coating 40. The reflective coating 40 can reflect P-polarized light. In X-axis direction, the laminated glass includes outer glass 10, a polymer interlayer 30, and inner glass 20 in sequence. The polymer interlayer 30 is sandwiched between the outer glass 10 and the inner glass 20.

The outer glass 10 has a first surface 11 and a second surface 12 opposite to the first surface 11. The second surface 12 faces the polymer interlayer 30. The first surface 11 is an interface between the outer glass 10 and air, that is, the first side-surface 101 of the head-up display glass 100. The inner glass 20 has a third surface 21 and a fourth surface 22 opposite to the third surface 21. The third surface 21 faces the polymer interlayer 30. The fourth surface 22 is away from the polymer interlayer 30. In an embodiment, a refractive index of the outer glass 10 differs from a refractive index of the polymer interlayer 30 by not greater than 0.1. A refractive index of the inner glass 20 differs from the refractive index of the polymer interlayer 30 by not greater than 0.1.

The reflective coating 40 is disposed on the fourth surface 22 of the inner glass 20. When the head-up display glass 100 is mounted on the vehicle, the reflective coating 40 faces the interior of the vehicle. A surface of the reflective coating 40 away from the fourth surface 22 is the second side-surface 102. The reflective coating 40 has a relatively high reflectivity for P-polarized light emitted by the projection light-source 200, and the first surface 11 of the outer glass 10 has a relatively low reflectivity for P-polarized light, so that the visual ghosting phenomenon is eliminated.

In this embodiment, the head-up display glass 100 has a reflectivity of Y for P-polarized light incident at an incident angle of θ. In one embodiment, when 60° ≤ θ ≤ 75°, Y ≥ 15%. In another embodiment, when 65°≤ θ ≤75°, Y≥20%. In yet another embodiment, when 70°≤ θ ≤75°, Y≥27%.

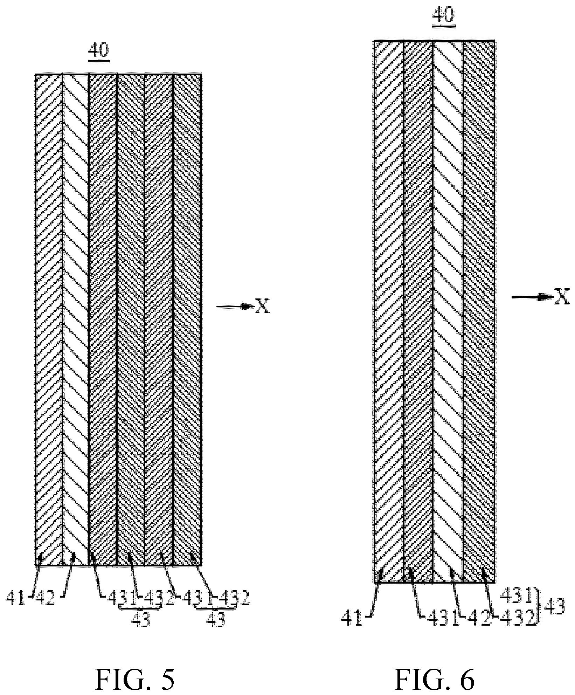

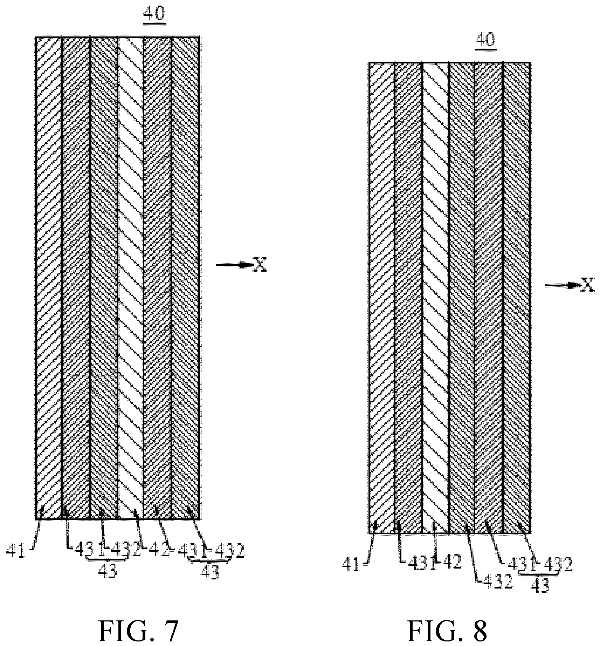

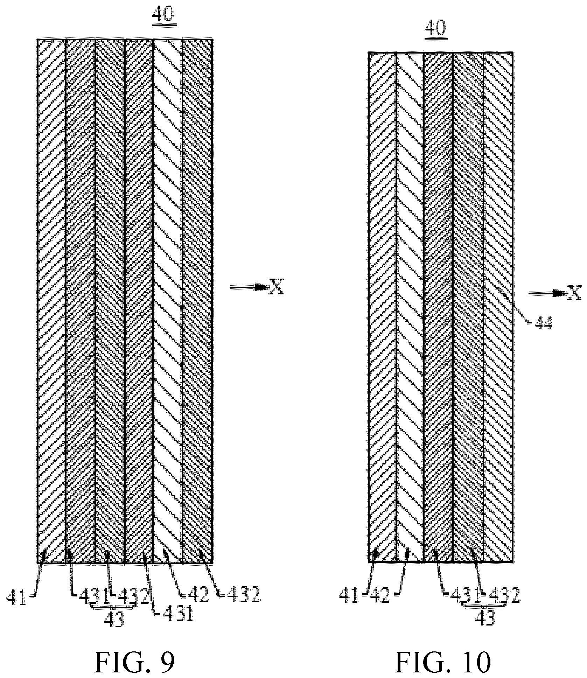

Reference can be made to FIG. 4 to FIG. 9, where FIG. 4 is a schematic structural view of a reflective coating 40 of the head-up display glass 100 of a first example in the first embodiment illustrated in FIG. 3, FIG. 5 is a schematic structural view of a reflective coating 40 of the head-up display glass 100 of a second example in the first embodiment illustrated in FIG. 3, FIG. 6 is a schematic structural view of a reflective coating 40 of the head-up display glass 100 of a third example in the first embodiment illustrated in FIG. 3, FIG. 7 is a schematic structural view of a reflective coating 40 of the head-up display glass 100 of a fourth example in the first embodiment illustrated in FIG. 3, FIG. 8 is a schematic structural view of a reflective coating 40 of the head-up display glass 100 of a fifth example in the first embodiment illustrated in FIG. 3, and FIG. 9 is a schematic structural view of a reflective coating 40 of the head-up display glass 100 of a sixth example in the first embodiment illustrated in FIG. 3. A positive direction of X axis illustrated in the figure is a direction away from the inner barrier layer 41.

In the first embodiment, the reflective coating 40 includes an inner barrier layer 41, an improvement layer 42, and at least one laminated structure 43 that are stacked. The inner barrier layer 41 is disposed on the fourth surface 22 of the inner glass 20. In the direction away from the inner barrier layer 41, that is, in the positive direction of X axis illustrated in the figure, that is, in a direction away from the outer glass 10 from the fourth surface 22, the inner barrier layer 41 and the at least one laminated structure 43 are stacked in sequence. Each laminated structure 43 includes a high refractive-index layer 431 and a low refractive-index layer 432 that are stacked in sequence, so as to form a structure of high refractive-index layer/low refractive-index layer. The high refractive-index layer 431 has a refractive index greater than or equal to 1.8, and the low refractive-index layer 432 has a refractive index less than 1.7. In some embodiments, the high refractive-index layer 431 has a refractive index greater than or equal to 2.0. In other embodiments, the high refractive-index layer 431 has a refractive index greater than or equal to 2.2. In the present disclosure, the term "stacked" includes direct contact and indirect contact.

When thermal treatment is performed on the reflective coating 40, the inner barrier layer 41 can prevent alkali metal ions through the fourth surface 22 of the inner glass 20 from damaging the improvement layer 42 and prevent oxygen diffusion from oxidizing the improvement layer 42, so that thermal stability of the reflective coating 40 is improved. A material of the inner barrier layer includes at least one of an oxide of zinc (Zn), tin (Sn), titanium (Ti), silicon (Si), aluminum (Al), niobium (Nb), zirconium (Zr), nickel (Ni), magnesium (Mg), chromium (Cr), or tantalum (Ta) and an oxide of an alloy thereof, or at least one of a nitride of Si, Al, Zr, boron (B), or Ti and a nitride of an alloy thereof. For example, the inner barrier layer 41 may include a silicon oxide (SiO₂) layer, a zinc tin oxide (ZnSnOx) layer, a silicon nitride (Si₃N₄) layer, and a zirconium silicon nitride (ZrSiNx) layer. In one embodiment, the thickness of the inner barrier layer 41 is greater than or equal to 3 nm. In another embodiment, the thickness of the inner barrier layer 41 is greater than or equal to 5 nm.

The improvement layer 42 has a certain reflection effect on P-polarized light, and can further improve the reflectivity of the reflective coating 40 for P-polarized light and cause the reflective coating 40 to maintain the relatively low reflectivity for visible light. Therefore, the requirement that the head-up display glass 100 has the relatively high reflectivity for P-polarized light and the relatively low reflectivity for visible light can be met. In one embodiment, a material of the improvement layer 42 includes at least one of an elementary substance of Ni, Cr, iron (Fe), Ti, molybdenum (Mo), copper (Cu), Al, gold (Au), Sn, Zr, indium (In), Si, Nb, germanium (Ge), tungsten (W), Ta, palladium (Pd), or platinum (Pt) and an alloy thereof. For example, the improvement layer 42 includes an amorphous Si layer, a crystalline Si layer, a Ti layer, an Al layer, a NiCr layer, etc.

In one embodiment, the elementary substance or the alloy in the improvement layer 42 has a crystal structure. The thickness of the improvement layer is 1 nm - 40 nm. Preferably, the thickness of the improvement layer 42 is greater than 5 nm. More preferably, the thickness of the improvement layer 42 is 10 nm - 30 nm. For example, the material of the improvement layer 42 having a crystal structure includes Ti, Mo, Al, or Si.

In another embodiment, the elementary substance or the alloy in the improvement layer 42 has an amorphous structure. The thickness of the improvement layer 42 is 1 nm - 5 nm.

Compared with the improvement layer 42 having the amorphous structure, the improvement layer 42 having the crystal structure has higher optical characteristics and lower visible-light reflectivity, and can further improve the reflectivity of the reflective coating 40 for P-polarized light and obtain lower visible-light reflectivity and better visible-light transmissivity.

A material of the high refractive-index layer 431 of the laminated structure 43 includes at least one of an oxide of Zn, Sn, Ti, Nb, Zr, Ni, In, Al, cerium (Ce), W, Mo, antimony (Sb), or bismuth (Bi) and an oxide of an alloy thereof, or at least one of a nitride and a nitrogen oxide of Si, Al, Zr, yttrium (Y), Ce, or lanthanum (La), and a nitride of an alloy thereof and a nitrogen oxide of an alloy thereof. For example, the material of the high refractive-index layer 431 may include TiOx or the like. In one embodiment, the thickness of the high refractive-index layer 431 is 30 nm - 85 nm. In another embodiment, the thickness of the high refractive-index layer 431 is 40 nm - 65 nm.

It can be understood that the high refractive-index layer 431 may has one or more sublayer structures. In other words, when the high refractive-index layer 431 has one sublayer structure, the refractive index of the single sublayer structure is greater than or equal to 1.8. When the high refractive-index layer 431 has multiple sublayer structures, the refractive index each of the multiple sublayer structures is greater than or equal to 1.8.

A material of the low refractive-index layer 432 of the laminated structure 43 includes at least one of an oxide of Si, Al, Zr, or B and an oxide of an alloy thereof. For example, the material of the low refractive-index layer 432 may include SiOx, or the like. In one embodiment, the thickness of the low refractive-index layer 432 is 35 nm - 130 nm. In another embodiment, the thickness of the low refractive-index layer 432 is 50 nm - 100 nm.

It can be understood that the low refractive-index layer 432 may have one or more sublayer structures. In other words, when the low refractive-index layer 432 has one sublayer structure, the refractive index of the single sublayer structure is less than 1.7. When the low refractive-index layer 432 has multiple sublayer structures, the refractive index of each of the multiple sublayer structures is less than 1.7.

In some examples, as illustrated in FIG. 4 and FIG. 5, the improvement layer 42 is disposed between the inner barrier layer 41 and the at least one laminated structure 43. As illustrated in FIG. 4, when the reflective coating 40 has one laminated structure 43, the improvement layer 42 is disposed between the inner barrier layer 41 and the high refractive-index layer 431 of the laminated structure 43. When the reflective coating 40 has multiple laminated structures 43, the improvement layer 42 is located between the inner barrier layer 41 and a laminated structure 43 that is first disposed in a direction from the inner barrier layer 41 to the positive direction of X axis. As illustrated in FIG. 5, when the reflective coating 40 has two laminated structures 43, the improvement layer 42 is located between the inner barrier layer 41 and a first laminated structure 43 in the direction from the inner barrier layer 41 to the positive direction of X axis. Specifically, the improvement layer 42 is located between the inner barrier layer 41 and a high refractive-index layer 431 of the first laminated structure 43.

In other examples, as illustrated in FIG. 6 to FIG. 9, the improvement layer 42 is disposed in the at least one laminated structure 43. Specifically, the improvement layer 42 is disposed between the high refractive-index layer 431 and the low refractive-index layer 432 of the at least one laminated structure 43. As illustrated in FIG. 6, when the reflective coating 40 has one laminated structure 43, the improvement layer 42 is located between the high refractive-index layer 431 and the low refractive-index layer 432 of the laminated structure 43. When the reflective coating 40 has multiple laminated structures 43, in one case, the improvement layer 42 may be located between two adjacent laminated structures 43. As illustrated in FIG. 7, the reflective coating 40 has two laminated structures 43, and the improvement layer 42 is located between a low refractive-index layer 432 of a first laminated structure 43 and a high refractive-index layer 431 of a second laminated structure 43 in the direction from the inner barrier layer 41 to the positive direction of X axis. In another case, the improvement layer 42 may be located between a high refractive-index layer 431 and a low refractive-index layer 432 of any one of the multiple laminated structures 43. As illustrated in FIG. 8, the reflective coating 40 has two laminated structures 43, and the improvement layer 42 is located between a high refractive-index layer 431 a first laminated structure 43 and a low refractive-index layer 432 of the first laminated structure 43 in the direction from the inner barrier layer 41 to the positive direction of X axis. As illustrated in FIG. 9, the reflective coating 40 has two laminated structures 43, and the improvement layer 42 is located between a high refractive-index layer 431 of a second laminated structure 43 and a low refractive-index layer 432 of the second laminated structure 43 in the direction from the inner barrier layer 41 to the positive direction of X axis.

In the reflective coating 40 of the head-up display glass 100 provided in embodiments of the present disclosure, the inner barrier layer 41 can prevent alkali metal ions of the inner glass 20 from damaging the improvement layer 42 of the reflective coating 40, and prevent oxygen diffusion from oxidizing the improvement layer 42. By means of cooperative use of the improvement layer 42 and the laminated structure 43, the reflectivity of the reflective coating 40 for P-polarized light is further improved, so that no visual ghosting phenomenon occurs when the P-polarized light is projected onto the head-up display glass 100, and the reflective coating 40 can maintain the relatively high visible-light transmissivity and the relatively low visible-light reflectivity. Therefore, the head-up display glass 100 meets the requirement of safe driving, and no obvious reflection phenomenon is observed from the interior of the vehicle.

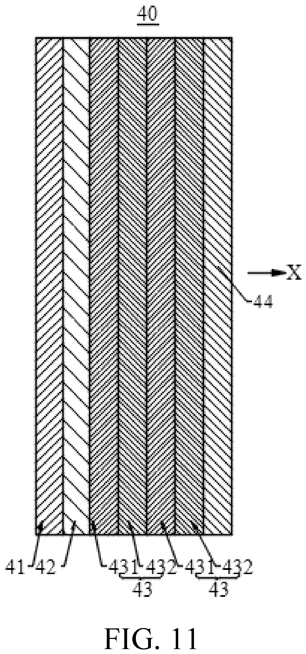

Reference can be made to FIG. 10 and FIG. 11, where FIG. 10 is a schematic structural view of a reflective coating 40 of the head-up display glass 100 of a first example in a second embodiment illustrated in FIG. 3, and FIG. 11 is a schematic structural view of a reflective coating 40 of the head-up display glass 100 of a second example in the second embodiment illustrated in FIG. 3.

The reflective coating 40 in the second embodiment differs from the reflective coating 40 in the first embodiment in that the reflective coating 40 in the second embodiment further includes an outer barrier layer 44. In other words, in the second embodiment, the reflective coating 40 includes an inner barrier layer 41, an improvement layer 42, at least one laminated structure 43, and an outer barrier layer 44. In the positive direction of X axis, that is, in the direction away from the outer glass 10 from the fourth surface 22, the inner barrier layer 41, the laminate structure 43, and the outer barrier layer 44 are stacked in sequence.

In this embodiment, the outer barrier layer 44 is disposed at one side of the outermost laminated structure away from the inner barrier layer 41, in the direction from the inner barrier layer 41 to the positive direction of X axis. In other words, the outer barrier layer 44 is disposed on a surface of a low refractive-index layer 432 of the outermost laminated structure 43 away from the inner barrier layer 41. As illustrated in FIG. 10, the reflective coating 40 in this example has one laminated structure 43, and the outer barrier layer 44 is disposed on a surface of the low refractive-index layer 432 of the laminated structure 43 away from the inner barrier layer 41. As illustrated in FIG. 11, the reflective coating 40 in this example has two laminated structures 43, and the outer barrier layer 44 is disposed at one side of the outermost laminated structure 43 in the direction from the inner barrier layer 41 to the positive direction of X axis. Specifically, the outer barrier layer 44 is disposed on a surface of a low refractive-index layer 432 of the second laminated structure 43 away from the inner barrier layer 41, in the direction from the inner barrier layer 41 to the positive direction of X axis.

When thermal treatment is performed on the reflective coating 40, the outer barrier layer 44 can improve thermal stability of the reflective coating 40, prevent the improvement layer 42 of the reflective coating 40 from oxidizing, and improve mechanical and chemical stability of the reflective coating 40. In one embodiment, a material of the outer barrier layer 44 includes at least one of a nitride of Si, Al, Zr, Ti, B, or Ni and a nitrogen oxide of an alloy thereof. For example, the outer barrier layer 44 may include a Si₃N₄ layer. Preferably, the outer barrier layer 44 may include a Si₃N₄ layer doped with Al or Zr. In one embodiment, the thickness of the outer barrier layer 44 is 3 nm - 30 nm, to avoid affecting the reflectivity for P-polarized light or affecting the reflected appearance color caused by the thickness of the outer barrier layer 44 being larger than 30 nm.

In the reflective coating 40 of the head-up display glass 100 provided in this embodiment, the outer barrier layer 44 can prevent oxygen in the environment from invading into the reflective coating 40, prevent the improvement layer 42 of the reflective coating 40 from oxidizing, and improve the mechanical and chemical stability of the reflective coating 40. Meanwhile, the outer barrier layer 44 can also cause the reflective coating 40 to maintain the relatively high reflectivity for P-polarized light and the relatively low reflectivity for visible light. Therefore, the head-up display glass 100 can meet the requirements of vehicle glass.

### Examples 1 to 7 and comparative examples 1 to 4

### Example 1

In example 1, head-up display glass 100 is provided. The head-up display glass 100 includes outer glass 10, a polymer interlayer 30, inner glass 20, and a reflective coating 40 that are stacked in sequence. The reflective coating 40 in this embodiment adopts the structure of the reflective coating 40 in the first example of the second embodiment described above. Specifically, structures of the reflective coating 40 are deposited on the inner glass 20 in sequence, and then molded according to a high-temperature (550 °C - 650 °C) molding process for vehicle glass. Then, the polymer interlayer 30 is sandwiched between the inner glass 20 and the outer glass 10, and finally high-pressure lamination is performed to form the head-up display glass 100.

In a direction away from the outer glass 10 from the fourth surface 22 of the inner glass 20, that is, in a direction from the inner glass 20 towards the interior of the vehicle, the reflective coating 40 includes an inner barrier layer 41, an improvement layer 42, a high refractive-index layer 431, a low refractive-index layer 432, and an outer barrier layer 44 that are stacked in sequence. In this embodiment, the high refractive-index layer 431 and the low refractive-index layer 432 together form a laminated structure 43, and the improvement layer 42 is disposed between the inner barrier layer 41 and the laminated structure 43.

Each of the outer glass 10 and the inner glass 20 is ordinary clear glass (clear glass with a visible-light transmissivity greater than or equal to 70%), and has the thickness of 2.1 mm. The polymer interlayer 30 is made of polyvinyl butyral (PVB) and has the thickness of 0.76 mm. The inner barrier layer 41 is a Si₃N₄ layer with the thickness of 10 nm. The improvement layer 42 is a NiCr layer with the thickness of 1.5 nm. The high refractive-index layer 431 of the laminated structure 43 is a TiOx layer with the thickness of 66 nm. The low refractive-index layer 432 of the laminated structure 43 is a SiO₂ layer with the thickness of 72 nm. The outer barrier layer 44 is a Si₃N₄ layer with the thickness of 10 nm.

### Example 2

In example 2, head-up display glass 100 is provided. The head-up display glass 100 includes outer glass 10, a polymer interlayer 30, inner glass 20, and a reflective coating 40 that are stacked in sequence. Each of the outer glass 10 and the inner glass 20 is ordinary clear glass (clear glass with a visible-light transmissivity greater than or equal to 70%), and has the thickness of 2.1 mm. The polymer interlayer 30 is made of PVB and has the thickness of 0.76 mm.

In the direction away from the outer glass 10 from the fourth surface 22 of the inner glass 20, that is, in the direction from the inner glass 20 towards the interior of the vehicle, the reflective coating 40 includes an inner barrier layer 41, a high refractive-index layer 431, an improvement layer 42, a low refractive-index layer 432, and an outer barrier layer 44 that are stacked in sequence. In this embodiment, the high refractive-index layer 431 and the low refractive-index layer 432 together form a laminated structure 43, and the improvement layer 42 is disposed in the laminated structure 43.

The inner barrier layer 41 is a Si₃N₄ layer with the thickness of 33 nm. The high refractive-index layer 431 is a TiOx layer with the thickness of 57 nm. The improvement layer 42 is a NiCr layer with the thickness of 1.9 nm. The low refractive-index layer 432 is a SiO₂ layer with the thickness of 86 nm. The outer barrier layer 44 is a Si₃N₄ layer with the thickness of 6.5 nm.

### Example 3

In example 3, head-up display glass 100 is provided. The difference from the head-up display glass 100 in example 2 is that the reflective coating 40 of the head-up display glass 100 in example 3 does not includes an outer barrier layer 44. The reflective coating 40 in this embodiment adopts the structure of the reflective coating 40 in the third example of the first embodiment described above.

In other words, in the direction away from the outer glass 10 from the fourth surface 22 of the inner glass 20, that is, in the direction from the inner glass 20 towards the interior of the vehicle, the reflective coating 40 includes an inner barrier layer 41, a high refractive-index layer 431, an improvement layer 42, and a low refractive-index layer 432 that are stacked in sequence. In this embodiment, the high refractive-index layer 431 and the low refractive-index layer 432 together form a laminated structure 43, and the improvement layer 42 is disposed in the laminated structure 43.

### Example 4

In example 4, head-up display glass 100 is provided. The head-up display glass 100 includes outer glass 10, a polymer interlayer 30, inner glass 20, and a reflective coating 40 that are stacked in sequence. In the direction away from the outer glass 10 from the fourth surface 22 of the inner glass 20, that is, in the direction from the inner glass 20 towards the interior of the vehicle, the reflective coating 40 includes an inner barrier layer 41, a high refractive-index layer 431, an improvement layer 42, a low refractive-index layer 432, and an outer barrier layer 44 that are stacked in sequence.

Each of the outer glass 10 and the inner glass 20 is ordinary clear glass (clear glass with a visible-light transmissivity greater than or equal to 70%), and has the thickness of 2.1 mm. The polymer interlayer 30 is made of PVB and has the thickness of 0.76 mm. The inner barrier layer 41 is a Si₃N₄ layer with the thickness of 28 nm. The high refractive-index layer 431 is a TiOx layer with the thickness of 57 nm. The improvement layer 42 is a Ti layer with the thickness of 3.5 nm. The low refractive-index layer 432 is a SiO₂ layer with the thickness of 75 nm. The outer barrier layer 44 is a Si₃N₄ layer with the thickness of 10 nm.

### Example 5

In example 5, head-up display glass 100 is provided. The head-up display glass 100 includes outer glass 10, a polymer interlayer 30, inner glass 20, and a reflective coating 40 that are stacked in sequence. In the direction away from the outer glass 10 from the fourth surface 22 of the inner glass 20, that is, in the direction from the inner glass 20 towards the interior of the vehicle, the reflective coating 40 includes an inner barrier layer 41, a high refractive-index layer 431, an improvement layer 42, a low refractive-index layer 432, and an outer barrier layer 44 that are stacked in sequence.

Each of the outer glass 10 and the inner glass 20 is ordinary clear glass (clear glass with a visible-light transmissivity greater than or equal to 70%), and has the thickness of 2.1 mm. The polymer interlayer 30 is made of PVB and has the thickness of 0.76 mm. The inner barrier layer 41 is a Si₃N₄ layer with the thickness of 42 nm. The high refractive-index layer 431 is a TiOx layer with the thickness of 60 nm. The improvement layer 42 is an Al layer with the thickness of 2 nm. The low refractive-index layer 432 is a SiO₂ layer with the thickness of 62 nm. The outer barrier layer 44 is a Si₃N₄ layer with the thickness of 12 nm.

### Example 6

In example 5, head-up display glass 100 is provided. The head-up display glass 100 includes outer glass 10, a polymer interlayer 30, inner glass 20, and a reflective coating 40 that are stacked in sequence. In the direction away from the outer glass 10 from the fourth surface 22 of the inner glass 20, that is, in the direction from the inner glass 20 towards the interior of the vehicle, the reflective coating 40 includes an inner barrier layer 41, an improvement layer 42, a high refractive-index layer 431, a low refractive-index layer 432, and an outer barrier layer 44 that are stacked in sequence. The reflective coating 40 in this embodiment adopts the structure of the reflective coating 40 in the first example of the second embodiment described above.

Each of the outer glass 10 and the inner glass 20 is ordinary clear glass (clear glass with a visible-light transmissivity greater than or equal to 70%), and has the thickness of 2.1 mm. The polymer interlayer 30 is made of PVB and has the thickness of 0.76 mm. The inner barrier layer 41 is a Si₃N₄ layer with the thickness of 52 nm. The improvement layer 42 is an amorphous Si layer with the thickness of 3.2 nm. The high refractive-index layer 431 is a TiOx layer with the thickness of 35 nm. The low refractive-index layer 432 is a SiO₂ layer with the thickness of 98 nm. The outer barrier layer 44 is a Si₃N₄ layer with the thickness of 5 nm.

### Example 7

In example 5, head-up display glass 100 is provided. The head-up display glass 100 includes outer glass 10, a polymer interlayer 30, inner glass 20, and a reflective coating 40 that are stacked in sequence. In the direction away from the outer glass 10 from the fourth surface 22 of the inner glass 20, that is, in the direction from the inner glass 20 towards the interior of the vehicle, the reflective coating 40 includes an inner barrier layer 41, an improvement layer 42, a high refractive-index layer 431, a low refractive-index layer 432, and an outer barrier layer 44 that are stacked in sequence. The reflective coating 40 in this embodiment adopts the structure of the reflective coating 40 in the first example of the second embodiment described above.

Each of the outer glass 10 and the inner glass 20 is ordinary clear glass (clear glass with a visible-light transmissivity greater than or equal to 70%), and has the thickness of 2.1 mm. The polymer interlayer 30 is made of PVB and has the thickness of 0.76 mm. The inner barrier layer 41 is a Si₃N₄ layer with the thickness of 50 nm. The improvement layer 42 is a crystalline Si layer with the thickness of 26 nm. The high refractive-index layer 431 is a TiOx layer with the thickness of 35 nm. The low refractive-index layer 432 is a SiO₂ layer with the thickness of 49 nm. The outer barrier layer 44 is a Si₃N₄ layer with the thickness of 12 nm.

### Comparative example 1

In comparative example 1, head-up display glass is provided. The head-up display glass includes outer glass, a polymer interlayer, inner glass, and a reflective coating that are stacked in sequence. The reflective coating includes a high refractive-index layer and a low refractive-index layer that are stacked in sequence. The high refractive-index layer is attached to the inner glass. The reflective coating does not include an inner barrier layer, an improvement layer, and an outer barrier layer.

Each of the outer glass and the inner glass is ordinary clear glass (clear glass with a visible-light transmissivity greater than or equal to 70%), and has the thickness of 2.1 mm. The polymer interlayer is made of PVB and has the thickness of 0.76 mm. The high refractive-index layer is a TiOx layer with the thickness of 72 nm. The low refractive-index layer is a SiO₂ layer with the thickness of 103 nm.

### Comparative example 2

In comparative example 2, head-up display glass is provided. The head-up display glass includes outer glass, a polymer interlayer, inner glass, and a reflective coating that are stacked in sequence. The reflective coating includes a high refractive-index layer and a low refractive-index layer that are stacked in sequence. The high refractive-index layer is attached to the inner glass. The reflective coating does not include an inner barrier layer, an improvement layer, and an outer barrier layer.

Each of the outer glass and the inner glass is ordinary clear glass (clear glass with a visible-light transmissivity greater than or equal to 70%), and has the thickness of 2.1 mm. The polymer interlayer is made of PVB and has the thickness of 0.76 mm. The high refractive-index layer is a TiOx layer with the thickness of 62 nm. The low refractive-index layer is a SiO₂ layer with the thickness of 98 nm.

### Comparative example 3

In comparative example 3, head-up display glass is provided. The difference from the head-up display glass 100 in example 1 in that the head-up display glass in comparative example 3 does not include an inner barrier layer 41.

### Comparative example 4

In comparative example 4, head-up display glass is provided. The head-up display glass includes outer glass, a polymer interlayer, inner glass, and a reflective coating that are stacked in sequence. In the direction away from the outer glass from the surface of inner glass, that is, in the direction from the inner glass towards the interior of the vehicle, the reflective coating includes an inner barrier layer, a high refractive-index layer, a low refractive-index layer, an improvement layer, and an outer barrier layer that are stacked in sequence. In comparative example 4, the high refractive-index layer and the low refractive-index layer together form a laminated structure, and the improvement layer is disposed between the laminated structure and the outer barrier layer.

Each of the outer glass and the inner glass is ordinary clear glass (clear glass with a visible-light transmissivity greater than or equal to 70%), and has the thickness of 2.1 mm. The polymer interlayer is made of PVB and has the thickness of 0.76 mm.

The inner barrier layer is a Si₃N₄ layer with the thickness of 7 nm. The high refractive-index layer is a TiOx layer with the thickness of 64 nm. The low refractive-index layer is a SiO₂ layer with the thickness of 92 nm. The improvement layer is a NiCr layer with the thickness of 1.5 nm. The outer barrier layer is a Si₃N₄ layer with the thickness of 6 nm.

Optical indexes of head-up display glass in examples 1 to 7 and comparative examples 1 to 4 are measured as follows. Visible-light transmissivities of the head-up display glass are measured. P-polarized light reflectivities and visible-light reflected colors of the head-up display glass are measured from the reflective coating. The results of examples 1 to 3 and comparative examples 1 to 4 are included in Table 1. The results of examples 4 to 7 are included in Table 2.

**Table 1 Optical indexes of head-up display glass in examples 1 to 3 and comparative examples 1 to 4**

| | Example 1 | Example 2 | Example 3 | Comparative example 1 | Comparative example2 | Comparative example3 | Comparative example4 |
|---|---|---|---|---|---|---|---|
| Outer glass | Ordinary clear glass with thickness of 2.1 mm | | | | | | |
| Polymer interlayer | Transparent PVB | | | | | | |
| Inner glass | Ordinary clear glass with thickness of 2.1 mm | | | | | | |
| Reflective coating | Si₃N₄/ 10nm | Si₃N₄/ 33nm | Si₃N₄/ 33nm | / | / | / | Si₃N₄/ 7nm |
| | NiCr/ 1.5nm | TiO_{X}/ 57nm | TiO_{X}/ 57nm | TiO_{X}/ 72nm | TiO_{X}/ 62nm | NiCr/ 1.5nm | TiO_{X}/ 64nm |
| | TiO_{X}/ 66nm | NiCr/ 1.9nm | NiCr/ 1.9nm | SiO₂/ 103nm | SiO₂/ 98nm | TiO_{X}/ 66nm | SiO₂/ 92nm |
| | SiO₂/ 72nm | SiO₂/ 86nm | SiO₂/ 86nm | / | / | SiO₂/ 72nm | NiCr/ 1.5nm |
| | Si₃N₄/ 10nm | Si₃N₄/ 6.5nm | / | / | / | Si₃N₄/ 10nm | Si₃N₄/ 6nm |
| Visible-light reflectivities (D65/10°) | 14.7% | 14.1% | 13.9% | 13.2% | 16.8% | 8.7% | 11.9% |

| P-polarized light reflectivities at different incident angles: | | | | | | | |
|---|---|---|---|---|---|---|---|
| 60° | 17.3 % | 18.5% | 16.1% | 13.3% | 17.9% | 11.2% | 9.5% |
| 65° | 21.9% | 22.6% | 20.1% | 17.8% | 22.0% | 14.8% | 12.8% |
| 70° | 29.3% | 29.4% | 27.6% | 24.4% | 28.6% | 21.7% | 18.4% |
| 73° | 35.1% | 35.6% | 33.8% | 30.2% | 34.1% | 24.4% | 24.5% |

| Reflected colors (D65/10°) | | | | | | | |
|---|---|---|---|---|---|---|---|
| L* | 44.5 | 45.1 | 45.7 | 38.51 | 48.5 | 32.6 | / |
| a* | -4.2 | -1.8 | -3.2 | -2.0 | -4.2 | -2.1 | / |
| b* | -5.2 | -5.2 | -7.2 | -8.5 | -13.1 | -6.2 | / |
| Visible-light transmissivities | 71.1% | 71.00% | 73.2% | 81.8% | 77.2% | 77.7% | 55.70% |

Head-up display glass is generally required to have a reflectivity less than 15% for visible light, a reflectivity greater than or equal to 15% for P-polarized light incident at an incident angle of 60°, and a reflectivity greater than or equal to 20% for P-polarized light incident at an incident angle of 65°. As can be seen from Table 1, by comparing comparative example 1 with comparative example 2, since each of the reflective coating of comparative example 1 and the reflective coating of comparative example 2 only has a laminated structure (TiOx/SiO₂) of a high refractive-index layer and a low refractive-index layer, both the requirement of the reflectivity of the head-up display glass for P-polarized light and the requirement of the reflectivity of the head-up display glass for visible light cannot be met by only adjusting the thickness of the high refractive-index layer and the thickness of the lower refractive-index layer. For example, the head-up display glass in comparative example 1 can meet the requirement that the reflectivity for visible light is less than 15%, but can neither meet the requirement of the reflectivity for P-polarized light incident at the incident angle of 60° nor the requirement of the reflectivity for P-polarized light incident at the incident angle of 65°. The head-up display glass in comparative example 2 can meet the requirement of the reflectivity for P-polarized light incident at the incident angle of 60° and the requirement of the reflectivity for P-polarized light incident at the incident angle of 65°, but cannot meet the requirement that the reflectivity for visible light is less than 15%. This indicates that the reflectivity for P-polarized light can be improved to some extent by only adjusting the thickness of the high refractive-index layer and the thickness of the low refractive-index layer, but as the reflectivity for P-polarized light is increased, the visible-light reflectivity is correspondingly increased or even higher than 15%, which does not meet the requirements. Therefore, it can be seen through analysis that both the requirement that the head-up display glass has the relatively high reflectivity for P-polarized light and the requirement that the head-up display glass has the relatively low reflectivity for visible light cannot be met by only disposing the laminated structure.

However, according to the data in examples 1 to 3, in the embodiments of the present disclosure, by disposing the inner barrier layer and the improvement layer in the reflective coating, the reflectivity of the head-up display glass for P-polarized light incident at 60° - 73° is increased to 17% - 35%, or even higher, and at the same time, the reflectivity of the head-up display glass for visible light can still be maintained to be less than 15%, and the head-up display glass can present a neutral color. In addition, by comparing example 3 with example 2, it can be seen that without the outer barrier layer, the overall thermal stability of the reflective coating can be slightly reduced, but the head-up display glass formed can still meet both the requirement of the reflectivity for P-polarized light and the requirement of the reflectivity for visible light.

By comparing comparative example 3 with examples 1 to 2, the reflective coating in comparative example 3 does not include an inner barrier layer, and the improvement layer (NiCr/1.5 nm) is in direct contact with the inner glass. During the high-temperature heat treatment, metal ions and oxygen ions through the surface of the inner glass diffuse, so that the improvement layer is damaged and oxidized, and thus the capability of the head-up display glass to reflect P-polarized light is weakened.

By comparing comparative example 4 with examples 1 to 2, although the improvement layer is disposed in the reflective coating in comparative example 4, the improvement layer is disposed between the laminated structure (TiOx/SiO₂) and the outer barrier layer (Si₃N₄), and specifically, the improvement layer is disposed on the low refractive-index layer of the laminated structure. After P-polarized light and visible light are incident into the reflective coating from the interior of the vehicle, part of the P-polarized light and the visible light are firstly absorbed and reflected by the improvement layer and then the rest of the P-polarized light and the visible light that are not absorbed and reflected pass through high refractive-index layer/low refractive-index layer. As a result, the overall performance of the reflective coating is weakened, and the head-up display glass formed can neither meet the requirement that the transmissivity for visible light is less than 70% nor the requirement that the reflectivity for P-polarized light is less than 15% or 20%.

**Table 2 Optical indexes of head-up display glass in examples 4 to 7**

| | Example 4 | Example 5 | Example 6 | Example 7 |
|---|---|---|---|---|
| Outer glass | Ordinary clear glass with thickness of 2.1 mm | | | |
| Polymer interlayer | Transparent PVB | | | |
| Inner glass | Ordinary clear glass with thickness of 2.1 mm | | | |
| Reflective coating | Si₃N₄/28nm | Si₃N₄/42nm | Si₃N₄/52nm | Si₃N₄/50nm |
| | TiO_{X}/57nm | TiO_{X}/60nm | Amorphous Si/3.2nm | Crystalline Si/26nm |
| | Ti/3.5nm | Al/2nm | TiO_{X}/35nm | TiO_{X}/35nm |
| | SiO₂/75 | SiO₂/62nm | SiO₂/98nm | SiO₂/49nm |
| | Si₃N₄/10nm | Si₃N₄/12nm | Si₃N₄/5nm | Si₃N₄/12nm |
| Visible-light reflectivities (D65/10°) | 13.9% | 14.8% | 14.2% | 14.5% |

| P-polarized light reflectivities at different incident angles: | | | | |
|---|---|---|---|---|
| 60° | 18.5% | 19.5% | 15.2% | 20.1% |
| 65° | 22.6% | 24.8% | 19.6% | 25.4% |
| 70° | 29.4% | 31.4% | 26.6% | 32.8% |
| 73° | 35.6% | 37.5% | 32.4% | 38.8% |

| Reflected colors (D65/10°): | | | | |
|---|---|---|---|---|
| L* | 45.1 | 45.2 | 45.7 | 45.1 |
| a* | -1.8 | -1.7 | -6.2 | -5.2 |
| b* | -5.2 | -4.9 | -4.2 | -5.4 |
| Visible-light transmissivities | 71.00% | 71.70% | 71.6% | 76.7% |

It can be seen from Table 1 and Table 2 that, in the head-up display glass provided in examples 1 to 7 of the present disclosure, the reflectivity for P-polarized light incident at 60° - 73° is increased to 17% - 35%, or even higher, the reflectivity for visible light can still be maintained to be less than 15%, and the neutral color can be obtained, so that the requirements of the vehicle glass can be met. As can be seen by comparing example 6 with example 7, when the improvement layer is made of a material having a crystal structure such as nanocrystalline silicon, due to the reflection characteristics and transmission characteristics of crystalline silicon for P-polarized light, compared with amorphous silicon, the reflective coating formed by using the crystalline silicon as the improvement layer can improve the reflectivity for P-polarized light to some extent, and can maintain the relatively high visible-light transmissivity and the relatively low visible-light reflectivity.

The above embodiments are only some embodiments of this disclosure, and cannot be used to limit the scope of the present disclosure. Those of ordinary skill in the art can understand all or a part of the process to realize the above embodiments of the present disclosure, and the equivalent changes made in accordance with the claims of this disclosure still belong to the scope of the present disclosure.

## Claims

1. Head-up display glass comprising laminated glass and a reflective coating, wherein the reflective coating is configured to reflect P-polarized light;
the laminated glass comprises outer glass, a polymer interlayer, and inner glass, and the polymer interlayer is sandwiched between the outer glass and the inner glass;
the reflective coating comprises an inner barrier layer, an improvement layer, and at least one laminated structure that are stacked, the inner barrier layer is disposed on a surface of the inner glass away from the polymer interlayer, the at least one laminated structure each comprises a high refractive-index layer and a low refractive-index layer that are stacked in sequence in a direction away from the inner barrier layer, the high refractive-index layer has a refractive index greater than or equal to 1.8, and the low refractive-index layer has a refractive index less than 1.7; and
the improvement layer is disposed between the inner barrier layer and the at least one laminated structure, or the improvement layer is disposed between the high refractive-index layer and the low refractive-index layer.

2. The head-up display glass of claim 1, having a reflectivity of Y for P-polarized light incident at an incident angle of θ, wherein when 60° ≤ θ ≤ 75°, Y ≥ 15%.

3. The head-up display glass of claim 2, wherein when 65° ≤ θ ≤ 75°, Y ≥ 20%; and when 70° ≤ θ ≤ 75°, Y ≥ 27%.

4. The head-up display glass of claim 1, having a reflectivity less than or equal to 15% for visible light incident vertically.

5. The head-up display glass of any one of claims 1 to 4, wherein a material of the inner barrier layer comprises at least one of an oxide of zinc (Zn), tin (Sn), titanium (Ti), silicon (Si), aluminum (Al), niobium (Nb), zirconium (Zr), nickel (Ni), magnesium (Mg), chromium (Cr), or tantalum (Ta) and an oxide of an alloy thereof, or at least one of a nitride of Si, Al, Zr, boron (B), or Ti and a nitride of an alloy thereof.

6. The head-up display glass of any one of claims 1 to 4, wherein a material of the improvement layer comprises at least one of an elementary substance of Ni, Cr, iron (Fe), Ti, molybdenum (Mo), copper (Cu), Al, gold (Au), Sn, Zr, indium (In), Si, Nb, germanium (Ge), tungsten (W), Ta, palladium (Pd), or platinum (Pt) and an alloy thereof.

7. The head-up display glass of claim 6, wherein the elementary substance or the alloy in the improvement layer has a crystal structure, and the improvement layer has a thickness of 1 nm - 40 nm.

8. The head-up display glass of claim 6, wherein the elementary substance or the alloy in the improvement layer has an amorphous structure, and the improvement layer has a thickness of 1 nm - 5 nm.

9. The head-up display glass of any one of claims 1 to 4, wherein the reflective coating further comprises an outer barrier layer disposed on a surface of the at least one laminated structure away from the inner barrier layer.

10. The head-up display glass of claim 9, wherein a material of the outer barrier layer comprises at least one of a nitride of Si, Al, Zr, Ti, B, or Ni and a nitrogen oxide of an alloy thereof.

11. The head-up display glass of claim 9, wherein the outer barrier layer has a thickness of 3 nm - 30 nm.

12. The head-up display glass of claim 1, wherein a refractive index of the inner glass differs from a refractive index of the polymer interlayer by not greater than 0.1, and a refractive index of the outer glass differs from the refractive index of the polymer interlayer by not greater than 0.1.

13. The head-up display glass of claim 1, wherein a reflected color of the head-up display glass measured from the reflective coating has a value of *a* ranging from -8 to 3 and a value of *b* ranging from -12 to 0.

14. Head-up display glass comprising laminated glass and a reflective coating, wherein the reflective coating is configured to reflect P-polarized light;
the laminated glass comprises outer glass, a polymer interlayer, and inner glass, and the polymer interlayer is sandwiched between the outer glass and the inner glass;
the reflective coating comprises an improvement layer and at least one laminated structure, the at least one laminated structure each comprises a high refractive-index layer and a low refractive-index layer that are stacked in sequence in a direction away from the inner barrier layer, the high refractive-index layer has a refractive index greater than or equal to 1.8, and the low refractive-index layer has a refractive index less than 1.7; and
the head-up display glass has a reflectivity of Y for P-polarized light incident at an incident angle of θ, wherein when 60° ≤ θ ≤ 75°, Y ≥ 15%.

15. The head-up display glass of claim 14, wherein the reflective coating further comprises an inner barrier layer, and the inner barrier layer is disposed on a surface of the inner glass away from the polymer interlayer.

16. The head-up display glass of claim 14, wherein a material of the improvement layer has a crystal structure, and the improvement layer has a thickness of 1 nm - 40 nm.

17. The head-up display glass of claim 14, wherein a material of the improvement layer has an amorphous structure, and the improvement layer has a thickness of 1 nm - 5 nm.

18. The head-up display glass of claim 14, wherein a material of the improvement layer comprises at least one of an elementary substance of nickel (Ni), chromium (Cr), iron (Fe), titanium (Ti), molybdenum (Mo), copper (Cu), aluminum (Al), gold (Au), tin (Sn), zirconium (Zr), indium (In), silicon (Si), niobium (Nb), germanium (Ge), tungsten (W), tantalum (Ta), palladium (Pd), or platinum (Pt) and an alloy thereof.

19. The head-up display glass of claim 14, wherein a reflected color of the head-up display glass measured from the reflective coating has a value of *a* ranging from -8 to 3 and a value of *b* ranging from -12 to 0.

20. A head-up display system comprising a projection light-source and the head-up display glass of any one of claims 1 to 19, wherein the projection light-source is configured to produce P-polarized light, and the P-polarized light is projected onto the reflective coating.
